# EUROPEAN PATENT SPECIFICATION

(11) **EP 3 279 454 B1**
(45) Date of publication and mention of the grant of the patent: **24.07.2019**
(21) Application number: 17175169.6
(22) Date of filing: 09.06.2017
(51) Int. Cl.: F02D 41/00, F02B 37/04, F02B 37/18, F02B 39/10, F02D 23/00, F02B 37/12, F02D 43/04, F02D 41/24, F02B 37/24

(54) **CONTROL DEVICE FOR INTERNAL COMBUSTION ENGINE**
STEUERUNGSVORRICHTUNG FÜR VERBRENNUNGSMOTOR
DISPOSITIF DE COMMANDE POUR MOTEUR À COMBUSTION INTERNE

(30) Priority: 05.08.2016 JP 2016154643
(43) Date of publication of application: 07.02.2018
(73) Proprietor: TOYOTA JIDOSHA KABUSHIKI KAISHA, Toyota-shi, Aichi-ken, 471-8571 (JP)
(72) Inventor: IWATANI, Kazuki, Toyota-shi, Aichi-ken, 471-8571 (JP)
(74) Representative: Winter, Brandl, Fürniss, Hübner, Röss, Kaiser, Polte - Partnerschaft mbB

(56) References cited:
- EP-A1- 2 634 392
- DE-A1- 10 124 543
- DE-A1-102014 210 028

## Description

### Background of the Invention

### Technical Field

The present disclosure relates to a control device for an internal combustion engine that includes a turbocharger and an electrically driven compressor.

### Background Art

An internal combustion engine that includes a turbocharger (an exhaust turbocharger) and an electrically driven compressor (an electrically driven supercharger) is known. An example of this kind of internal combustion engine is disclosed in JP 2008-274833A, for example.

In the internal combustion engine disclosed in JP 2008-274833A, an intake channel is connected to an internal combustion engine main body (an engine main body). An exhaust channel is connected to the internal combustion engine main body. This internal combustion engine is provided with a turbocharger that includes a compressor impeller (a compressor wheel) that is installed in the intake channel and a turbine impeller (a turbine wheel) that is installed in the exhaust channel. The compressor impeller and the turbine impeller are coupled to each other by a rotation shaft (a shaft). In a part of the intake channel on the downstream side of the compressor impeller, an electrically driven compressor is installed.

Furthermore, the internal combustion engine disclosed in JP 2008-274833A is provided with a first pressure sensor (a boost pressure sensor) and a second pressure sensor (an intake air pressure sensor). The first pressure sensor detects a boost pressure at a part of the intake channel between the compressor impeller and the electrically driven compressor. The second pressure sensor detects a boost pressure at a part of the intake channel on the downstream side of the electrically driven compressor.

JP 2008-274833A is a patent document which may be related to the present disclosure. Other examples for patent documents which may be related to the present disclosure are EP 2 634 392 A1, DE 10 2014 210028 A1 and DE 101 24 543 A1. In EP 2 634 392 A1, a two-stage turbocharger system for an internal combustion engine is disclosed. Therein, for controlling operation of the internal combustion engine, a pressure sensor at the inlet of the low-pressure stage turbocharger and a pressure sensor at the outlet of the high-pressure stage turbocharger are used. DE 10 2014 210028 A1 discloses another method for controlling a supercharger system of an internal combustion engine with a first and a second compression stage, the first compression stage being a turbocharger and an electrically driven compressor forming the second compression stage. The pressure values measured for controlling the supercharger system are the inlet pressure of the first compression stage and the outlet pressure of the second compression stage. DE 101 24 543 A1 discloses a method for controlling an electrically driven compressor in cooperation with a turbocharger for providing pressurized air to an internal combustion engine, wherein the electrically driven compressor is controlled with respect to the compression ratio of the turbocharger.

### Summary of the Invention

In the internal combustion engine disclosed in JP 2008-274833A, the boost pressure detected by the first pressure sensor is not used for a control to conform this boost pressure to its target value but is used for an intake air bypass control. That is to say, in the internal combustion engine disclosed in JP 2008-274833A, a target value of the boost pressure detected by the first pressure sensor is not calculated, and, therefore, a control to rapidly conform this boost pressure to the target value is also not performed. Accordingly, in the internal combustion engine disclosed in JP 2008-274833A, a boost pressure at a part of the intake channel between the compressor impeller and the electrically driven compressor cannot be conformed to a target value thereof.

Furthermore, in the internal combustion engine disclosed in JP 2008-274833A, the electrically driven compressor is not controlled on the basis of the difference between the boost pressure detected by the second boost pressure and the target value thereof, but is controlled on the basis of whether it is during the time of acceleration or not. That is, in the internal combustion engine disclosed in JP 2008-274833A, the target value of the boost pressure detected by the second boost pressure is not calculated, and therefore, a control to rapidly conform this boost pressure to its target value is also not performed. Thus, in the internal combustion engine disclosed in JP 2008-274833A, the boost pressure at a part of the intake on the downstream side of the electrically driven compressor cannot be conformed to the target value thereof.

As described above, in the internal combustion engine disclosed in JP 2008-274833A, the electrically driven compressor is controlled without the setting of each of the target value of the boost pressure detected by the first pressure and the target value of the boost pressure detected by the second pressure. Thus, in order to achieve an acceleration according to an acceleration request from a driver, it is required to at least a process to adapt, in accordance with the degree of the acceleration, the boost pressure assisted by the electrically driven compressor and a process to detect the acceleration. As a result, there is a concern that the number of processes required to this kind of adaption may increase.

In view of the problem described above, an object of the present disclosure is to provide a control device for an internal combustion engine that can rapidly conform the boost pressure at a part of an intake channel between a compressor of a turbocharger and an electrically driven compressor and the boost pressure at a part of the intake channel on the downstream side of the electrically driven compressor to the respective target values, and thereby can achieve an acceleration according to an acceleration request from a driver in a simple manner.

A control device for an internal combustion engine according to the present disclosure is configured to control an internal combustion engine that includes: an internal combustion engine main body; an intake channel connected to the internal combustion engine main body; an exhaust channel connected to the internal combustion engine main body; a turbocharger that includes a compressor arranged in the intake channel and a turbine arranged in the exhaust channel; an electrically driven compressor arranged at a part of the intake channel on a downstream side of the compressor of the turbocharger; a first pressure sensor configured to detect a first boost pressure which is boost pressure at a part of the intake channel between the compressor of the turbocharger and the electrically driven compressor; a second pressure sensor configured to detect a second boost pressure which is boost pressure at a part of the intake channel on a downstream side of the electrically driven compressor; and an exhaust gas flow rate adjusting device configured to adjust a flow rate of exhaust gas supplied to the turbine. The control device is programmed to control the exhaust gas flow rate adjusting device based on a difference between a target value of the first boost pressure and a detection value of the first boost pressure with the first pressure sensor. The control device is programmed to control the electrically driven compressor based on a difference between a target value of the second boost pressure and a detection value of the second boost pressure with the second pressure sensor. The control device is programmed to calculate the target value of the second boost pressure based on an engine speed, an engine torque, and a first relationship between the engine speed, the engine torque and the target value of the second boost pressure. The control device is programmed to calculate the target value of the first boost pressure based on an amount of air taken into the internal combustion engine main body, the target value of the second boost pressure and a second relationship between the air amount, the target value of the first boost pressure and the target value of the second boost pressure. In another example according to the present disclosure, the control device is programmed to calculate the target value of the first boost pressure based on an engine speed, an engine torque, and a first relationship between the engine speed, the engine torque and the target value of the first boost pressure. The control device is programmed to calculate the target value of the second boost pressure based on an amount of air taken into the internal combustion engine main body, the target value of the first boost pressure and a second relationship between the air amount, the target value of the first boost pressure and the target value of the second boost pressure.

In the control device for an internal combustion engine according to the present disclosure, the exhaust gas flow rate adjusting device may be a variable nozzle device arranged in the turbine at an inlet of the exhaust gas.

In the control device for an internal combustion engine according to the present disclosure, the exhaust gas flow rate adjusting device may be a waste gate channel configured to bypass the turbine and a waste gate valve arranged in the waste gate channel.

Namely, in the control device for an internal combustion engine according to the present disclosure, the exhaust gas flow rate adjusting device for adjusting the flow rate of the exhaust gas supplied to the turbine of the turbocharger arranged in the exhaust channel is controlled on the basis of the difference between the target value of the first boost pressure that is boost pressure at the part of the intake channel between the compressor of the turbocharger and the electrically driven compressor arranged on the downstream side of the compressor, and the detection value of the first boost pressure with the first pressure sensor.

Thus, with the control device for an internal combustion engine according to the present disclosure, the target value of the first boost pressure and the detection value of the first boost pressure can be rapidly conformed to each other as compared with the internal combustion engine disclosed in JP 2008-274833A in which the control of the exhaust gas flow rate adjusting device based on the difference between the target value of the first boost pressure and the detection value of the first boost pressure is not performed.

Also, in the control device for an internal combustion engine according to the present disclosure, the electrically driven compressor is controlled on the basis of the difference between the target value of the second boost pressure that is boost pressure at the part of the intake channel on the downstream side of the electrically driven compressor and the detection value of the second boost pressure with the second pressure sensor.

Thus, with the control device for an internal combustion engine according to the present disclosure, the target value of the second boost pressure and the detection value of the second boost pressure can be rapidly conformed to each other as compared with the internal combustion engine disclosed in JP 2008-274833A in which the control of the electrically driven compressor based on the difference between the target value of the second boost pressure and the detection value of the second pressure is not performed.

Moreover, in the control device for an internal combustion engine according to the present disclosure, the target value of the second boost pressure is set. In more detail, in the control device for an internal combustion engine according to the present disclosure the target value of the second boost pressure is calculated on the basis of the engine speed, the engine torque and the first relationship that is a relationship between the engine speed, the engine torque and the target value of the second boost pressure.

Furthermore, in the control device for an internal combustion engine according to the present disclosure the target value of the first boost pressure is set. In more detail, in the control device for an internal combustion engine according to the present disclosure, the target value of the first boost pressure is calculated on the basis of the air amount taken into the internal combustion engine main body, the target value of the second boost pressure and the second relationship that is a relationship between the air amount, the target value of the first boost pressure and the target value of the second boost pressure.

Moreover, in the control device for an internal combustion engine according to another example of the present disclosure, the target value of the first boost pressure is set. In more detail, in the control device for an internal combustion engine according to the other example of the present disclosure the target value of the first boost pressure is calculated on the basis of the engine speed, the engine torque and the first relationship that is a relationship between the engine speed, the engine torque and the target value of the first boost pressure.

Furthermore, in the control device for an internal combustion engine according to the other example of the present disclosure, the target value of the second boost pressure is set. In more detail, in the control device for an internal combustion engine according to the present disclosure, the second boost pressure is calculated on the basis of the air amount taken into the internal combustion engine main body, the target value of the first boost pressure and the second relationship that is a relationship between the air amount, the target value of the first boost pressure and the target value of the second boost pressure.

Thus, with the control device for an internal combustion engine according to the present disclosure, an acceleration according to an acceleration request from the driver can be achieved in a simple manner as compared with the internal combustion engine disclosed in JP 2008-274833A in which the electrically driven compressor is controlled without the setting of each of the target value of the first boost pressure and the target value of the second boost pressure.

In the control device for an internal combustion engine according to the present disclosure, the second relationship may be set such that, when the air amount is zero, the target value of the first boost pressure and the target value of the second boost pressure become equal to each other, and such that, when the air amount is greater than zero, the target value of the first boost pressure becomes greater than the target value of the second boost pressure.

Namely, in this control device for an internal combustion engine, a pressure loss is taken into consideration. This pressure loss corresponds to the difference in pressure between the part of the intake channel at which the first pressure sensor for detecting the first boost pressure is provided and the part of the intake channel at which the second pressure sensor for detecting the second boost pressure that is arranged on the downstream side of the first pressure sensor is provided. In addition, in this control device, the second relationship that is a relationship between the air amount, the target value of the first boost pressure and the target value of the second boost pressure is set such that, when the air amount that is the amount of the intake air taken into the internal combustion engine main body is zero, the target value of the first boost pressure and the target value of the second boost pressure become equal to each other, and such that, when the air amount is greater than zero, the target value of the first boost pressure becomes greater than the target value of the second boost pressure.

As a result, in this control device for an internal combustion engine, the target value of the first boost pressure and the target value of the second boost pressure can be appropriately set as compared with an example in which the pressure loss between the part of the intake channel at which the first pressure sensor is provided and the part thereof at which the second pressure sensor is provided is not taken into consideration.

In the control device for an internal combustion engine according to the present disclosure, the second relationship may be set such that, when the air amount is greater, a difference between the target value of the first boost pressure and the target value of the second boost pressure becomes greater.

Namely, in this control device for an internal combustion engine, it is taken into consideration that the difference between the actual boost pressure at a location at which the first pressure sensor for detecting the first boost pressure is provided and the actual boost pressure at a location at which the second pressure sensor for detecting the second boost pressure is provided becomes greater when the air amount that is the amount of the intake air taken into the internal combustion engine main body is greater. In addition, in this control device, the second relationship that is a relationship between the air amount, the target value of the first boost pressure and the target value of the second boost pressure is set such that the difference between the target value of the first boost pressure and the target value of the second boost pressure becomes greater when the air amount is greater.

As a result, in this control device for an internal combustion engine, the target value of the first boost pressure and the target value of the second boost pressure can be appropriately set as compared with an example in which it is not taken into consideration that the difference between the actual boost pressure at the location at which the first pressure sensor is provided and the actual boost pressure at the location at which the second pressure sensor is provided becomes greater when the air amount that is the amount of the intake air taken into the internal combustion engine main body is greater.

According to the control device for an internal combustion engine of the present disclosure, the boost pressure at a part of an intake channel between a compressor of a turbocharger and an electrically driven compressor and the boost pressure at a part of the intake channel on the downstream side of the electrically driven compressor can be rapidly conformed to the respective target values, and an acceleration according to an acceleration request from a driver can be thereby achieved in a simple manner.

### Brief Description of the Drawings

Fig. 1 is a schematic diagram showing a configuration of a system in which a control device for an internal combustion engine according to a first embodiment is used;
Fig. 2 is a flow chart for explaining controls of a variable nozzle device and an electrically driven compressor performed by the control device for an internal combustion engine according to the first embodiment;
Fig. 3 is a graph showing a first relationship used for calculation of a target value P2trg of a second boost pressure obtained in step S100 shown in Fig. 2;
Fig. 4 is a graph showing a second relationship used for calculation of a target value P1trg of a first boost pressure in step S103 in Fig. 2;
Fig. 5 is a time chart for describing the first boost pressure P1 and the second boost pressure P2 which are changed as a result of the controls of the variable nozzle device and the electrically driven compressor performed by the control device of an internal combustion engine according to the first embodiment; and
Fig. 6 is a schematic diagram showing a configuration of a system in which the control device for an internal combustion engine according to a second embodiment is used.

### Detailed Description

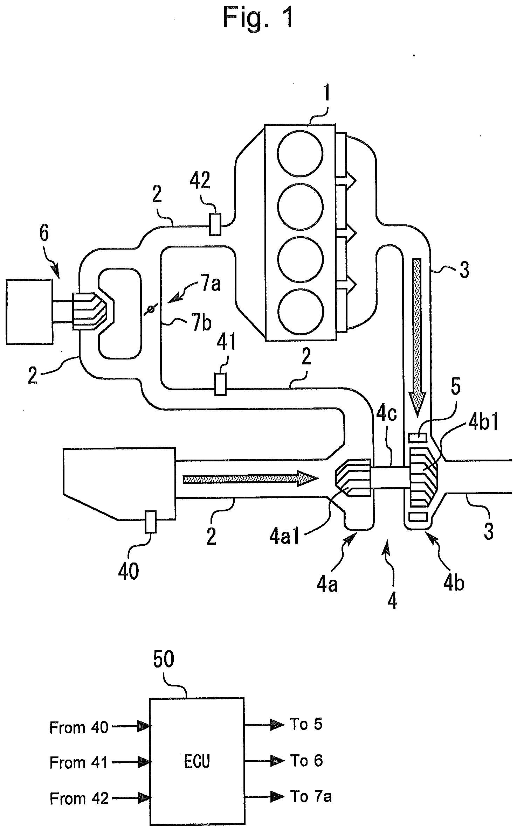

In the following, a first embodiment concerning a control device for an internal combustion engine according to the present disclosure will be described. Fig. 1 is a schematic diagram showing a configuration of a system in which the control device for an internal combustion engine according to the first embodiment is used. In the example shown in Fig. 1 in which the control device for an internal combustion engine according to the first embodiment is used, an internal combustion engine main body 1 that includes four cylinders is provided.

In the example shown in Fig. 1 in which the control device for an internal combustion engine according to the first embodiment is used, an intake channel 2 is connected to the internal combustion engine main body 1. Also, an exhaust channel 3 is connected to the internal combustion engine main body 1. Moreover, a turbocharger 4 that includes a compressor 4a arranged in the intake channel 2 and a turbine 4b arranged in the exhaust channel 3 is provided. A compressor impeller 4a1 and a turbine impeller 4b1 of the turbocharger 4 are coupled to each other by a rotation shaft 4c. Furthermore, an electrically driven compressor 6 is arranged at a part of the intake channel 2 on the downstream side of the compressor 4a.

In the example shown in Fig. 1 in which the control device for an internal combustion engine according to the first embodiment is used, a bypass channel 7b configured to bypass the electrically driven compressor 6 is provided, and a bypass valve 7a is arranged in the bypass channel 7b.

In the example shown in Fig. 1 in which the control device for an internal combustion engine according to the first embodiment is used, a first pressure sensor 41 configured to detect a first boost pressure which is boost pressure at a part of the intake channel 2 between the compressor 4a and the electrically driven compressor 6 is provided. The output signal of the first pressure sensor 41 is inputted to an electronic control unit (ECU) 50 that serves as a control device. Moreover, a second pressure sensor 42 configured to detect a second boost pressure which is boost pressure at a part of the intake channel 2 on the downstream side of the electrically driven compressor 6 is provided. The output signal of the second pressure sensor 42 is inputted to the ECU 50. In addition, an air flow sensor 40 configured to detect an air amount taken into the internal combustion engine main body 1 is provided. The output signal of the air flow sensor 40 is inputted to the ECU 50.

In the example shown in Fig. 1 in which the control device for an internal combustion engine according to the first embodiment is used, an exhaust gas flow rate adjusting device configured to adjust the flow rate of the exhaust gas supplied to the turbine4 is provided. In more detail, as the exhaust gas flow rate adjusting device, a variable nozzle device 5 is provided in the turbine 4b at the inlet of the exhaust gas. The signal for controlling the variable nozzle device 5 is outputted from the ECU 50. In addition, the signal for controlling the electrically driven compressor 6 and the signal for controlling the bypass valve 7a are outputted from the ECU 50.

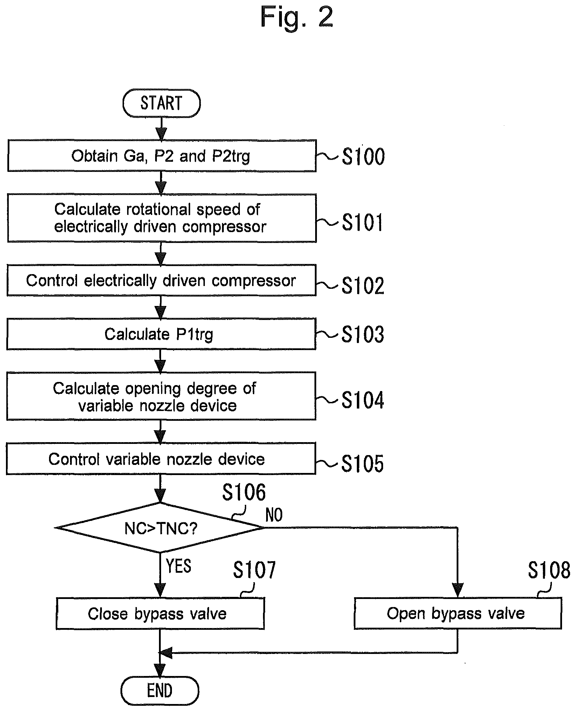

Fig. 2 is a flow chart for explaining controls of the variable nozzle device 5 (see Fig. 1) and the electrically driven compressor 6 (see Fig. 1) performed by the control device for an internal combustion engine according to the first embodiment. The processing shown in Fig. 2 is performed during operation of the internal combustion engine.

When the processing shown in Fig. 2 is started, first, in step S100, an air amount Ga taken into the internal combustion engine main body 1 that is detected by the air flow sensor 40 (Fig. 1) is obtained by the ECU 50 (see Fig. 1), for example. Also, in step S100, a second boost pressure P2 that is boost pressure at a part of the intake channel 2 (see Fig. 1) on the downstream side of the electrically driven compressor 6 and that is detected by the second pressure sensor 42 (see Fig. 1) is obtained by the ECU 50, for example. Moreover, in step S100, a target value P2trg of the second boost pressure is obtained by the ECU 50, for example.

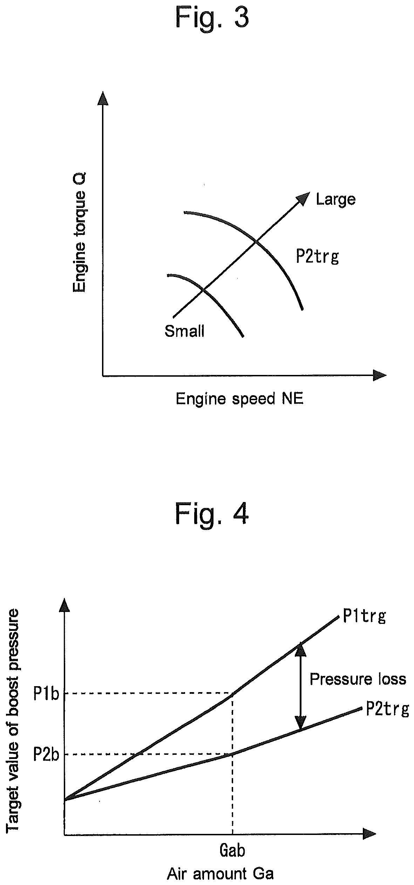

Fig. 3 is a graph showing a first relationship used for calculation of the target value P2trg of the second boost pressure obtained in step S100 shown in Fig. 2. In Fig. 3, the vertical axis denotes an engine torque Q, and the horizontal axis denotes an engine speed NE. Each of the curves shown in Fig. 3 represent an equal value line of the target value p2trg of the second boost pressure.

In the example shown in Fig. 3 in which the control device for an internal combustion engine according to the first embodiment is used, the ECU 50 calculates the target value p2trg of the second boost pressure on the basis of the engine torque Q, the engine speed NE and the first relationship shown in Fig. 3. The engine torque Q is calculated by, for example, the ECU 50 on the basis of, for example, the output signal of an accelerator position sensor (not shown). The engine speed NE is calculated by, for example, the ECU 50 on the basis of, for example, a crank angle sensor (not shown). As shown in Fig. 3, the target value P2trg of the second boost pressure is higher when the engine torque Q is higher. Also, the target value P2trg of the second boost pressure is higher when the engine speed NE is higher.

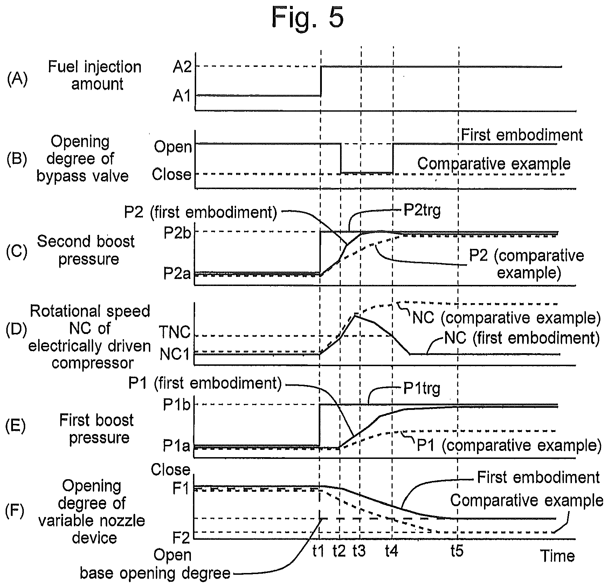

Next, in step S101 shown in Fig. 2, the rotational speed NC of the electrically driven compressor 6 (see Fig. 1) is calculated by, for example, the ECU 50 (see Fig. 1) on the basis of the target value P2trg of the second boost pressure obtained in step S100. In the example shown in Fig. 5, when the target value P2trg of the second boost pressure changes at a time point t1 from a value P2a to a value P2b as shown in section (C) of Fig. 5, the rotational speed NC of the electrically driven compressor 6 is calculated so as to have a value shown by a curve "NC (first embodiment)" in section (D) of Fig. 5.

To be more specific, in the example shown in Fig. 5, the rotational speed NC of the electrically driven compressor 6 is calculated so as to be rapidly conformed to the target value P2trg of the second boost pressure without an overshoot of the second boost pressure P2 as shown by a curve "P2 (first embodiment)" in the section (C) of Fig. 5.

Next, in step S102 shown in Fig. 2, the electrically driven compressor 6 is controlled by the ECU 50 so as to achieve the rotational speed NC of the electrically driven compressor 6 calculated in step S101. That is, in the example shown in Fig. 5, in step S102, the electrically driven compressor 6 is controlled so as to be rapidly conformed to the target value P2trg of the second boost pressure without an overshoot of the second boost pressure P2 as shown by the curve "P2 (first embodiment)" in the section (C) of Fig. 5. In other words, in the example shown in Fig. 5, in step S102, the electrically driven compressor 6 is controlled by the ECU 50 on the basis of the difference between the target value P2trg of the second boost pressure and the second boost pressure (detection value) P2 detected by the second pressure sensor 42 (see Fig. 1). In more detail, in the example shown in Fig.5, if the difference between the target value P2trg of the second boost pressure and the second boost pressure (detection value) P2 is zero, the rotation speed of the electrically driven compressor 6 calculated in step S101 is zero.

Then, in step S103 shown in Fig. 2, a target value P1trg of the first boost pressure is calculated by the ECU 50 (see Fig. 1), for example.

Fig. 4 is a graph showing a second relationship used for calculation of the target value P1trg of the first boost pressure in step S103 in Fig. 2. In Fig. 4, the vertical axis denotes target values of boost pressures (the target value P1trg of the first boost pressure and the target value P2trg of the second boost pressure), and the horizontal axis denotes the air amount Ga taken into the internal combustion engine main body 1 (see Fig. 1). As shown in Fig. 4, the second relationship represents a relationship between the target value P1trg of the first boost pressure, the target value P2trg of the second boost pressure and the air amount Ga taken into the internal combustion engine main body 1.

In the example shown in Fig. 4 in which the control device for an internal combustion engine according to the first embodiment is used, a pressure loss is taken into consideration. This pressure loss corresponds to the difference in pressure between the part of the intake channel 2 (see Fig.1) at which the first pressure sensor 41 (see Fig. 1) for detecting a first boost pressure P1 is provided and the part of the intake channel 2 at which the second pressure sensor 42 for detecting the second boost pressure P2 that is arranged on the downstream side of the first pressure sensor 41 is provided. The pressure loss may be calculated on the basis of the air amount Ga taken into the internal combustion engine main body 1 (see Fig. 1) and a known arbitrary experimental equation. In more detail, the second relationship that is the relationship between the air amount Ga, the target value P1trg of the first boost pressure and the target value P2trg of the second boost pressure is set such that, when the air amount Ga is zero, the target value P1trg of the first boost pressure and the target value P2trg of the second boost pressure become equal to each other, and such that, when the air amount Ga is greater than zero, the target value P1trg of the first boost pressure becomes greater than the target value P2trg of the second boost pressure by the pressure loss.

As a result, in the example shown in Fig. 4 in which the control device for an internal combustion engine according to the first embodiment is used, the target value P1trg of the first boost pressure and the target value P2trg of the second boost pressure can be appropriately set as compared with an example in which the pressure loss between the part of the intake channel 2 at which the first pressure sensor 41 is provided and the part thereof at which the second pressure sensor 42 is provided is not taken into consideration.

Furthermore, in the example shown in Fig. 4 in which the control device for an internal combustion engine according to the first embodiment is used, it is taken into consideration that the difference between the actual boost pressure at a location at which the first pressure sensor 41 for detecting the first boost pressure P1 is provided and the actual boost pressure at a location at which the second pressure sensor 42 for detecting the second boost pressure P2 is provided becomes greater when the air amount Ga that is the amount of the intake air taken into the internal combustion engine main body 1 is greater. In more detail, the second relationship that is the relationship between the air amount Ga, the target value P1trg of the first boost pressure and the target value P2trg of the second boost pressure is set such that the difference between the target value P1trg of the first boost pressure and the target value P2trg of the second boost pressure becomes greater when the air amount Ga is greater.

As a result, in the example shown in Fig. 4 in which the control device for an internal combustion engine according to the first embodiment is used, the target value P1trg of the first boost pressure and the target value P2trg of the second boost pressure can be appropriately set as compared with an example in which it is not taken into consideration that the difference between the actual boost pressure at the location at which the first pressure sensor 41 is provided and the actual boost pressure at the location at which the second pressure sensor 42 is provided becomes greater when the air amount Ga that is the amount of the intake air taken into the internal combustion engine main body 1 is greater.

As described above, in step S103 in Fig. 2, the target value P1trg of the first boost pressure is calculated by, for example, the ECU 50 (see Fig. 1) on the basis of the air amount Ga taken into the internal combustion engine main body 1 and the target value P2trg of the second boost pressure that are obtained in step S100, as well as the second relationship that is the relationship between the air amount Ga shown in Fig. 4, the target value P1trg of the first boost pressure and the target value P2trg of the second boost pressure.

In the example shown in Figs. 2, 3 and 4 in which the control device for an internal combustion engine according to the first embodiment is used, the target value P2trg of the second boost pressure is obtained in step S100, and the target value P1trg of the first boost pressure is calculated in step S103 on the basis of the air amount Ga, the target value P2trg of the second boost pressure and the second relationship shown in Fig. 4.

Next, in step S104 in Fig. 2, the opening degree of the variable nozzle device 5 (see Fig. 1) that serves as the exhaust gas flow rate adjusting device for adjusting the flow rate of the exhaust gas supplied to the turbine 4b (see Fig. 1) is calculated by, for example, the ECU 50 (see Fig. 1) on the basis of the target value P1trg of the first boost pressure calculated in step S103. In the example shown in Fig. 5, when the target value P1trg of the first boost pressure changes at the time point t1 from a value P1a to a value P1b as shown in section (E) of Fig. 5, the opening degree of the variable nozzle device 5 is calculated so as to have a value shown by a curve "First embodiment" in section (F) of Fig. 5.

To be more specific, in the example shown in Fig. 5, the opening degree of the variable nozzle device 5 is calculated so as to be rapidly conformed to the target value P1trg of the first boost pressure without an overshoot of the first boost pressure P1 as shown by a curve "P1 (first embodiment)" in the section (E) of Fig. 5.

Next, in step S105 shown in Fig. 2, the variable nozzle device 5 is controlled by the ECU 50 so as to achieve the opening degree of the variable nozzle device 5 calculated in step S104. That is, in the example shown in Fig. 5, in step S105, the variable nozzle device 5 is controlled so as to be rapidly conformed to the target value P1trg of the first boost pressure without an overshoot of the first boost pressure P1 as shown by the curve "P1 (first embodiment)" in the section (E) of Fig. 5. In other words, in the example shown in Fig. 5, in step S105, the variable nozzle device 5 that serves as the exhaust gas flow rate adjusting device is controlled by the ECU 50 on the basis of the difference between the target value P1trg of the first boost pressure and the first boost pressure (detection value) P1 detected by the first pressure sensor 41 (see Fig. 1).

Next, in step S106 in Fig. 2, it is determined by, for example, the ECU 50 (see Fig. 1) whether or not the rotational speed NC of the electrically driven compressor 6 calculated in step S101 is higher than a threshold value TNC (see the section (D) of Fig. 5). If the result of the determination in step S106 is positive, the processing proceeds to step S107, and, on the other hand, if the result is negative, the processing proceeds to step S108. In step S107, the bypass valve 7a (see Fig. 1) is closed by the ECU 50. In step S108, the bypass valve 7a is opened by the ECU 50.

Fig. 5 is a time chart for describing the first boost pressure P1 and the second boost pressure P2 which are changed as a result of the controls of the variable nozzle device 5 (see Fig. 1) and the electrically driven compressor 6 (see Fig. 1) performed by the control device of an internal combustion engine according to the first embodiment. To be more specific, section (A) of Fig. 5 denotes the fuel injection amount, section (B) of Fig. 5 denotes the opening degree of the bypass valve 7a (see Fig. 1) (more specifically, whether the bypass valve 7a is in an open state or a closed state), and the section (C) of Fig. 5 denotes the second boost pressure P2. More specifically, the section (C) of Fig. 5 denotes the target value P2trg of the second boost pressure, the second boost pressure "P2 (first embodiment)" in the example in which the control device for an internal combustion engine according to the first embodiment is used, and the second boost pressure "P2 (comparative example)" in a comparative example.

The section (D) of Fig. 5 denotes the rotational speed NC of the electrically driven compressor 6. In more detail, the section (D) of Fig. 5 denotes the rotational speed "NC (first embodiment)" of the electrically driven compressor 6 in the example in which the control device for an internal combustion engine according to the first embodiment is used, and the rotational speed "NC (comparative example)" of the electrically driven compressor 6 in the comparative example. The section (E) of Fig. 5 denotes the first boost pressure P1. In more detail, the section (E) of Fig. 5 denotes the target value P1trg of the first boost pressure, the first boost pressure "P1 (first embodiment)" in the example in which the control device for an internal combustion engine according to the first embodiment is used, and the first boost pressure "P1 (comparative example)" in the comparative example.

The section (F) of Fig. 5 denotes the opening degree of the variable nozzle device 5 (see Fig. 1). In more detail, the section (F) of Fig. 5 denotes the opening degree of the variable nozzle device 5 (indicated by "First embodiment" in the section (F) of Fig. 5) in the example in which the control device for an internal combustion engine according to the first embodiment is used, and the opening degree of the variable nozzle device 5 (indicated by "Comparative example" in the section (F) of Fig. 5) in the comparative example.

In the example shown in Fig. 5 in which the control device for an internal combustion engine according to the first embodiment is used, an acceleration request from the driver is not made before the time point t1, but the acceleration request from the driver is made at the time point t1. As a result, as shown in the section (A) of Fig. 5, a value A2 of the fuel injection amount required to satisfy the acceleration request is calculated at the time point t1 by, for example, the ECU 50. That is, at the time point t1, the fuel injection amount is increased in a stepwise fashion from a value A1 to the value A2.

Also, in the example shown in Fig. 5 in which the control device for an internal combustion engine according to the first embodiment is used, at the time point t1 at which the acceleration request is made, the engine torque Q required to satisfy the acceleration request is calculated by, for example, the ECU 50. Moreover, the engine speed NE at the time point t1 is calculated by, for example, the ECU 50 on the basis of, for example, the output signal of the crank angle sensor (not shown). Moreover, at the time point t1, the value P2b (see the section (C) of Fig. 5) of the target value P2trg of the second boost pressure is calculated by, for example, the ECU 50 on the basis of the engine torque Q, the engine speed NE and the first relationship shown in Fig. 3. That is, as shown in the section (C) of Fig. 5, at the time point t1, the target value P2trg of the second boost pressure is increased in a stepwise fashion from the value P2a to the value P2b.

Furthermore, in the example shown in Fig. 5 in which the control device for an internal combustion engine according to the first embodiment is used, at the time point t1 at which the acceleration request from the driver is made, a value Gab (see Fig. 4) of the air amount Ga required to satisfy the acceleration request is calculated by, for example, the ECU 50. In addition, at the time point t1, in step S103 in Fig. 2, the value P1b (see Fig. 4 and the section (E) of Fig. 5) of the target value P1trg of the first boost pressure is calculated by, for example, the ECU 50 on the basis of the value Gab of the air amount Ga, the value P2b (see Fig. 4 and the section (C) of Fig. 5) of the target value P2trg of the second boost pressure and the second relationship shown in Fig. 4. That is, as shown in the section (E) of Fig. 5, at the time point t1, the target value P1trg of the first boost pressure is increased from the value P1a to the value P1b in a stepwise fashion.

In the example shown in Fig. 5 in which the control device for an internal combustion engine according to the first embodiment is used, in step S101 in Fig. 2, the rotational speed NC (see the section (D) of Fig. 5) of the electrically driven compressor 6 (see Fig. 1) is calculated by, for example, the ECU 50 (see Fig. 1) on the basis of the value P2b of the target value P2trg of the second boost pressure obtained in step S100 in Fig. 2. That is, the rotational speed NC of the electrically driven compressor 6 is calculated so as to have a value indicated by the curve "NC (first embodiment)" in the section (D) of Fig. 5.

In more detail, the rotational speed NC of the electrically driven compressor 6 is calculated so as to be rapidly conformed to the value P2b of the target value P2trg of the second boost pressure without an overshoot of the second boost pressure P2 as shown by the curve "P2 (first embodiment)" in the section (C) of Fig. 5.

Furthermore, in the example shown in Fig. 5 in which the control device for an internal combustion engine according to the first embodiment is used, in step S102 in Fig. 2, the electrically driven compressor 6 is controlled by the ECU 50 so as to achieve the rotational speed NC of the electrically driven compressor 6 (the value indicated by the curve "NC (first embodiment)" in the section (D) of Fig. 5) calculated in step S101 in Fig. 2.

In more detail, in the example shown in Fig. 5 in which the control device for an internal combustion engine according to the first embodiment is used, during a time period from t1 to t3, since the second boost pressure P2 (the value indicated by the curve "P2 (first embodiment) in the section (C) of Fig. 5) is smaller than the value P2b of the target value P2trg of the second boost pressure as shown in the section (C) of Fig. 5, the rotational speed NC of the electrically driven compressor 6 is increased from the value NC1 by a feedback control as shown in the section (D) of Fig. 5.

In the example shown in Fig. 5 in which the control device for an internal combustion engine according to the first embodiment is used, in order to reduce the overshoot of the second boost pressure P2, immediately before the time point t3 at which the second boost pressure P2 is conformed to the value P2b of the target value P2trg of the second boost pressure as shown in the section (C) of Fig. 5, the increase of the rotational speed NC of the electrically driven compressor 6 is terminated and the rotational speed NC of the electrically driven compressor 6 is then decreased to the value NC1 as shown in the section (D) of Fig. 5.

In the example shown in Fig. 5 in which the control device for an internal combustion engine according to the first embodiment is used, since the first boost pressure P1 (the value indicated by the curve "P1 (first embodiment)" in the section (E) of Fig. 5) is increased as shown in the section (E) of Fig. 5, the second boost pressure P2 (the value indicated by the curve "P2 (first embodiment)" in the section (C) of Fig. 5) is maintained, at or after the time point t3, at the value P2b of the target value P2trg of the second boost pressure although the rotational speed NC of the electrically driven compressor 6 is decreased as shown in the section (D) of Fig. 5.

Moreover, in the example shown in Fig. 5 in which the control device for an internal combustion engine according to the first embodiment is used, in step S104 in Fig. 2, the opening degree (see the section (F) of Fig. 5) of the variable nozzle device 5 (see Fig. 1) is calculated by, for example, the ECU 50 (see Fig. 1) on the basis of the value P1b (see the section (E) of Fig. 5) of the target value P1trg of the first boost pressure calculated in step S103 in Fig. 2. That is, the opening degree of the variable nozzle device 5 is calculated so as to have a value indicated by the curve "First embodiment" in the section (F) of Fig. 5,

In more detail, the opening degree of the variable nozzle device 5 is calculated so as to be rapidly conformed to the value P1b of the target value P1trg of the first boost pressure without the overshoot of the first boost pressure P1 as indicated by the curve "P1 (first embodiment" in the section (E) of Fig. 5.

Moreover, in the example shown in Fig. 5 in which the control device for an internal combustion engine according to the first embodiment is used, in step S105 in Fig. 2, the variable nozzle device 5 is controlled by the ECU 50 so as to achieve the opening degree of the variable nozzle device 5 (the value indicated by the curve "First embodiment" in the section (F) of Fig. 5) calculated in step S104 in Fig. 2.

In more detail, in the example shown in Fig. 5 in which the control device for an internal combustion engine according to the first embodiment is used, during a time period from t1 to t5, since the first boost pressure P1 (the value indicated by the curve "P1 (first embodiment)" in the section (E) of Fig. 5) is smaller than the value P1b of the target value P1trg of the first boost pressure as shown in the section (E) of Fig. 5, the opening degree of the variable nozzle device 5 is controlled, by a feedback control, so as to be closed (that is, so as to shift to the upper side in the section (F) of Fig. 5) as compared with a base opening degree (see the section (F) of Fig. 5) as shown in the section (F) of Fig. 5 in order to increase the first boost pressure P1. That is, the opening degree of the variable nozzle device 5 is controlled so as to fall within a range between a value F1 (see the section (F) of Fig. 5) and the base opening degree.

Furthermore, in the example shown in Fig. 5 in which the control device for an internal combustion engine according to the first embodiment is used, the opening degree of the variable nozzle device 5 is controlled to be the base opening degree at or after a time point t5 at which the first boost pressure P1 indicated by the curve "P1 (first embodiment)" in the section (E) of Fig. 5 is conformed to the value P1b of the target value P1trg of the first boost pressure.

That is, in the example shown in Fig. 5, the base opening degree of the variable nozzle device 5 is set such that, if the opening degree (see the section (F) of Fig. 5) of the variable nozzle device 5 is controlled to be the base opening degree (see the section (F) of Fig. 5), the first boost pressure P1 is conformed to the value P1b (see the section (E) of Fig.5) of the target value P1trg of the first boost pressure. In other words, if the opening degree of the variable nozzle device 5 is controlled to be a value F2 on the side of opening degrees that are greater (that is, on the lower side in the section (F) of Fig. 5) as compared with the base opening degree as indicated by a curve "Comparative example" in the section (F) of Fig. 5, the first boost pressure P1 does not increase so as to reach the value P1b as indicated by a curve "Comparative example" in the section (E) of Fig. 5.

In the example shown in Fig. 5 in which the control device for an internal combustion engine according to the first embodiment is used, it is determined by, for example, the ECU 50 (see Fig. 1) that the result of the determination in step S106 in Fig. 2 is positive during a time period from t2 to t4 in which the rotational speed NC (see the section (D) of Fig. 5) of the electrically driven compressor 6 (see Fig. 1) is greater than the threshold value TNC (see the section (D) of Fig. 5), and, in step S107 in Fig. 2, the bypass valve 7a (see Fig. 1) is closed by the ECU 50 as indicated by a solid line "First embodiment" in the section (B) of Fig. 5.

Also, in the example shown in Fig. 5 in which the control device for an internal combustion engine according to the first embodiment is used, it is determined by, for example, the ECU 50 (see Fig. 1) that the result of the determination in step S106 in Fig. 2 is negative in a time period at or before the time point t2 and a time period at or after the time point t4, in each of which the rotational speed NC of the electrically driven compressor 6 is equal to or less than the threshold value TNC, and, in step S108 in Fig. 2, the bypass valve 7a is opened by the ECU 50 as indicated by the solid line "First embodiment" in the section (B) of Fig. 5.

In the example shown in Fig. 5 in which the control device for an internal combustion engine according to the first embodiment is used, after the acceleration request is made by the driver (that is, at or after the time point t1), the supercharging by the electrically driven compressor 6 (see Fig. 1) is used to assist the supercharging by the turbocharger 4 (see Fig. 1) as shown in the section (D) of Fig. 5. That is, at or after the time point t5 at which the first boost pressure P1 reaches the target value P1trg of the first boost pressure as shown in the section (E) of Fig. 5, the electrically driven compressor 6 is not driven.

In the example shown in Fig. 5 in which the control device for an internal combustion engine according to the first embodiment is used, as indicated by the "P1 (first embodiment)" in the section (E) of Fig. 5, the first boost pressure P1 can be rapidly increased as compared with the comparative example indicated by the "P1 (comparative example)" in the section (E) of Fig. 5. Therefore, in the example shown in Fig. 5, as indicated by the "P2 (first embodiment)" in the section (C) of Fig. 5, the second boost pressure P2 can also be rapidly increased as compared with the comparative example indicated by the "P2 (comparative example)" in the section (C) of Fig. 5.

Also, in the example shown in Fig. 5 in which the control device for an internal combustion engine according to the first embodiment is used, as indicated by the "P1 (first embodiment)" in the section (E) of Fig. 5, the first boost pressure P1 at or after the time point t5 is higher than that in the comparative example indicated by the "P1 (comparative example)" in the section (E) of Fig. 5. Therefore, in contrast to the comparative example indicated by the "NC (comparative example)" in the section (D) of Fig. 5, the example shown in Fig. 5 is not required to drive the electrically driven compressor 6 at or after the time point t5 as indicated by the "NC (first embodiment)" in the section (D) of Fig. 5, and the consumption of the electric power can be reduced as compared with the comparative example indicated by the "NC (comparative example)" in the section (D) of Fig. 5.

Moreover, in the example shown in Fig. 5 in which the control device for an internal combustion engine according to the first embodiment is used, the second boost pressure P2 can be increased smoothly without a stepwise change as indicated by the "P2 (first embodiment)" in the section (C) of Fig. 5. That is, the roll of supercharging can be turned over smoothly from the electrically driven compressor 6 to the turbocharger 4. In other words, the occurrence of a stepwise change of the second boost pressure P2 that is likely to occur when the roll of the supercharging is turned over from the electrically driven compressor 6 to the turbocharger 4 can be reduced.

Furthermore, in the example shown in Fig. 5 in which the control device for an internal combustion engine according to the first embodiment is used, the first boost pressure P1 rapidly reaches the target value P1trg of the first boost pressure as indicated by the "P1 (first embodiment)" in the section (E) of Fig. 5, and the second boost pressure P2 also rapidly reaches the target value P2trg of the second boost pressure as indicated by the "P2 (first embodiment)" in the section (C) of Fig. 5. In addition, the difference between the target value P1trg of the first boost pressure and the target value P2trg of the second boost pressure that corresponds to the pressure loss is set as shown in Fig. 4.

On the other hand, in the example indicated by the "Comparative example" in Fig. 5, a relationship as shown in, for example, Fig. 4 is not set between the target value P1trg of the first boost pressure and the target value P2trg of the second boost pressure. Because of this, even if, as indicated by the "NC (comparative example)" in the section (D) of Fig. 5, the rotational speed NC of the electrically driven compressor 6 (see Fig. 1) is rapidly increased as with the example indicated by the "NC (first embodiment)" in the section (D) of Fig. 5, the opening degree of the variable nozzle device 5 (see Fig. 1) is set, as indicated by the "Comparative example" in the section (F) of Fig. 5, on the side of opening degrees that are greater (that is, on the lower side in the section (F) of Fig. 5) as compared with the example indicated by the "First embodiment" in the section (F) of Fig. 5. Therefore, as indicated by the "P1 (comparative example)" in the section (E) of Fig. 5, the rise of the first boost pressure is delayed as compared with the example indicated by the "P1 (first embodiment)" in the section (E) of Fig. 5, and, as a result, as indicated by the "P2 (comparative example)" in the section (C) of Fig. 5, the rise of the second boost pressure is also delayed as compared with the example indicated by the "P2 (first embodiment)" in the section (C) of Fig. 5.

Furthermore, in the example indicated by the "Comparative example" in Fig. 5, since the electrically driven compressor 6 is continuously driven at or after the time point 5 as indicated by the "NC (comparative example)" in the section (D) of Fig. 5, the consumption of the electric power is increased as compared with the example indicated by the "NC (first embodiment)" in the section (D) of Fig. 5.

As described above, in the control device for an internal combustion engine according to the first embodiment, the variable nozzle device 5 (see Fig. 1) that serves as the exhaust gas flow rate adjusting device for adjusting the flow rate of the exhaust gas supplied to the turbine 4b (see Fig. 1) of the turbocharger 4 arranged in the exhaust channel 3 (see Fig. 1) is controlled on the basis of the difference between the target value P1trg (see the section (E) of Fig. 5) of the first boost pressure that is boost pressure at a part of the intake channel 2 (see Fig. 1) between the compressor 4a (see Fig. 1) of the turbocharger 4 (see Fig. 1) and the electrically driven compressor 6 (see Fig. 1) arranged on the downstream side of the compressor 4a, and the detection value of the first boost pressure indicated by the "P1 (first embodiment)" in the section (E) of Fig. 5 with the first pressure sensor 41 (see Fig. 1).

Thus, with the control device for an internal combustion engine according to the first embodiment, the target value P1trg of the first boost pressure and the detection value of the first boost pressure can be rapidly conformed to each other as compared with the internal combustion engine disclosed in JP 2008-274833A in which the control of the exhaust gas flow rate adjusting device based on the difference between the target value P1trg of the first boost pressure and the detection value of the first boost pressure is not performed.

In addition, in the control device for an internal combustion engine according to the first embodiment, the electrically driven compressor 6 is controlled on the basis of the difference between the target value P2trg (see the section (C) of Fig. 5) of the second boost pressure that is boost pressure at a part of the intake channel 2 on the downstream side of the electrically driven compressor 6 and the detection value of the second boost pressure indicated by the "P2 (first embodiment)" in the section (C) of Fig. 5 with the second pressure sensor 42 (see Fig. 1).

Thus, with the control device for an internal combustion engine according to the first embodiment, the target value P2trg of the second boost pressure and the detection value of the second boost pressure can be rapidly conformed to each other as compared with the internal combustion engine disclosed in JP 2008-274833A in which the control of the electrically driven compressor 6 based on the difference between the target value P2trg of the second boost pressure and the detection value of the second pressure is not performed.

Moreover, as described above, in the control device for an internal combustion engine according to the first embodiment, the target value P2trg of the second boost pressure that is one of the target value P1trg of the first boost pressure and the target value P2trg of the second boost pressure is set. In more detail, in the control device for an internal combustion engine according to the first embodiment, the target value P2trg of the second boost pressure is calculated on the basis of the engine speed NE, the engine torque Q and the first relationship shown in Fig. 3 between the engine speed NE, the engine torque Q and the target value P2trg of the second boost pressure.

In addition, in the control device for an internal combustion engine according to the first embodiment, the target value P1trg of the first boost pressure that is the other of the target value P1trg of the first boost pressure and the target value P2trg of the second boost pressure is set. In more detail, in the control device for an internal combustion engine according to the first embodiment, the target value P1trg of the first boost pressure is calculated on the basis of the air amount Ga taken into the internal combustion engine main body 1 (see Fig. 1), the target value P2trg of the second boost pressure and the second relationship shown in Fig. 4 between the air amount Ga, the target value P1trg of the first boost pressure and the target value P2trg of the second boost pressure.

Thus, with the control device for an internal combustion engine according to the first embodiment, an acceleration according to an acceleration request from the driver can be achieved in a simple manner as compared with the internal combustion engine disclosed in JP 2008-274833A in which the electrically driven compressor 6 (see Fig. 1) is controlled without the setting of each of the target value P1trg of the first boost pressure and the target value P2trg of the second boost pressure.

In other words, in the control device for an internal combustion engine according to the first embodiment, the target value P1trg of the first boost pressure and the target value P2trg of the second boost pressure are set such that they have the second relationship shown in Fig. 4. Also, the feedback control of the variable nozzle device 5 (see Fig. 1) is performed on the basis of the difference between the target value P1trg of the first boost pressure and the detection value of the first boost pressure, and the feedback control of the electrically driven compressor 6 (see Fig. 1) is performed on the basis of the difference between the target value P2trg of the second boost pressure and the detection value of the second boost pressure.

As a result, with the control device for an internal combustion engine according to the first embodiment, without the need for providing processes to adapt the control of the variable nozzle device 5 and the control of the electrically driven compressor 6 and to perform a complex model-based control, such as one disclosed in, for example, JP 5817578 B, and therefore, an acceleration according to an acceleration request from the driver can be achieved and the second boost pressure can be increased smoothly without a stepwise change.

To be more specific, in the control device for an internal combustion engine according to the first embodiment, in order to rapidly conform the detection value of the second boost pressure to the target value P2trg of the second boost pressure, the supercharging by the electrically driven compressor 6 with high responsivity is mainly used first. Then, after the detection value of the first boost pressure has risen, in order to increase the detection value of the first boost pressure, the supercharging by the electrically driven compressor 6 is not mainly used and the supercharging of the turbocharger 4 (see Fig. 1) is mainly used. As a result, the detection value of the second boost pressure is increased so as to reach the target value P2trg of the second boost pressure. Specifically, since the feedback control for the electrically driven compressor 6 is performed on the basis of the difference between the target value P2trg of the second boost pressure and the detection value of the second boost pressure, the supercharging by the electrically driven compressor 6 is no longer used as the difference between the target value P2trg of the second boost pressure and the detection value of the second boost pressure decreases. That is, since the feedback control for the electrically driven compressor 6 is performed such that the target value P2trg of the second boost pressure and the detection value of the second boost pressure are conformed to each other (in other words, such that the difference therebetween decreases), the detection value of the second boost pressure is not changed in a stepwise faction, that is, the difference between the target value P2trg of the second boost pressure and the detection value of the second boost pressure is not increased in a stepwise fashion even when the rotational speed of the electrically driven compressor 6 is decreased.

In the example shown in Fig. 1 in which the control device for an internal combustion engine according to the first embodiment is used, since the compressor 4a of the turbocharger 4 is arranged at a part of the intake channel 2 on the upstream side of the electrically driven compressor 6, the supercharging by the turbocharger 4 is mainly performed and the supercharging by the electrically driven compressor 6 that is arranged at a part of the intake channel 2 on the downstream side of the compressor 4a assists the supercharging by the turbocharger 4.

That is, in the example shown in Fig. 1 in which the control device for an internal combustion engine according to the first embodiment is used, since the electrically driven compressor 6 is not used as the main supercharging, the consumption of the electric power can be reduced as compared with an example in which an electrically driven compressor is used for the main supercharging.

In the internal combustion engine disclosed in JP 2008-274833A, a throttle valve is arranged at a part of the intake channel on the downstream side of the electrically driven compressor, whereas, in an another example (not shown) in which the control device for an internal combustion engine according to the first embodiment is used, the electrically driven compressor 6 may be arranged at a part of the intake channel 2 (see Fig. 1) on the downstream side of a throttle vale (not shown) in order to rapidly increase the pressure of the intake air taken into the internal combustion engine main body 1 (see Fig. 1) by sufficiently achieving the high response of the electrically driven compressor 6 (see Fig. 1). That is, in this example in which the control device for an internal combustion engine according to the first embodiment is used, the electrically driven compressor 6 is arranged at the closet possible position from the internal combustion engine main body 1 in order to sufficiently achieve the high response of the electrically driven compressor 6.

In addition, in still another example in which the control device for an internal combustion engine according to the first embodiment is used, an arbitrary number of cylinders other than four cylinders may be provided in the internal combustion engine main body 1.

Moreover, in yet another example in which the control device for an internal combustion engine according to the first embodiment is used, the bypass valve 7a and the bypass channel 7b may be omitted.

Moreover, in still another example in which the control device for an internal combustion engine according to the first embodiment is used, the target value P1trg of the first boost pressure may be calculated on the basis of the engine torque Q, the engine speed NE and a relationship as shown in Fig. 3 between the engine torque Q, the engine speed NE and the target value P1trg of the first boost pressure. In this relationship, the target value P1trg of the first boost pressure is higher when the engine torque Q is greater, and the target value P1trg of the first boost pressure is higher when the engine speed NE is higher.

Furthermore, in yet example in which the control device for an internal combustion engine according to the first embodiment is used, the target value P1trg of the first boost pressure may be obtained in step S100, and the target value P2trg of the second boost pressure may be calculated in step S103 on the basis of the air amount Ga, the target value P1trg of the first boost pressure and the second relationship shown in Fig. 4.

In the following, a second embodiment concerning the control device for an internal combustion engine according to the present disclosure will be described.

The control device for an internal combustion engine according to the second embodiment is configured in the same manner as the control device for an internal combustion engine described above except the points describe below. Therefore, the control device for an internal combustion engine according to the second embodiment can achieve a similar advantageous effect to the control device for an internal combustion engine according to the first embodiment described above except for the point described below.

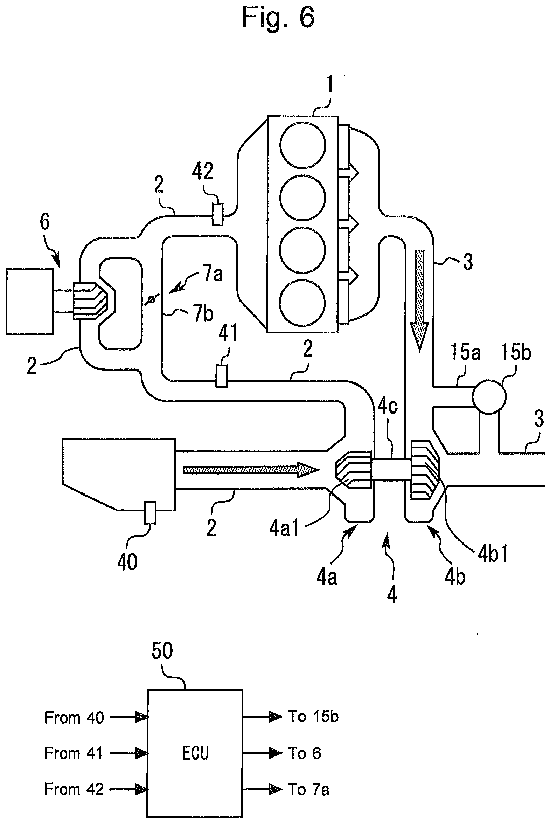

Fig. 6 is a schematic diagram showing a configuration of a system in which the control device for an internal combustion engine according to the second embodiment is used.

In the example shown in Fig. 1 in which the control device for an internal combustion engine according to the first embodiment is used, the variable nozzle device 5 that serves as the exhaust gas flow rate adjusting device for adjusting the flow rate of the exhaust gas supplied to the turbine 4b is arranged at the inlet of the exhaust gas in the turbine 4b. However, in the example shown in Fig. 6 in which the control device for an internal combustion engine according to the second embodiment is used, a waste gate channel 15a configured to bypass the turbine 4b and a waste gate vale 15b arranged in the waste gate channel 15a are provided as the exhaust gas flow rate adjusting device, instead of the above. The signal for controlling the waste gate valve 15b is outputted from the ECU 50.

In the example shown in Fig. 2 in which the control device for an internal combustion engine according to the first embodiment is used, the controls of the variable nozzle device 5 (see Fig. 1) and the electrically driven compressor 6 (see Fig. 1) are performed. However, in an example shown in Fig. 2 in which the control device for an internal combustion engine according to the second embodiment is used, a control of the waste gate valve 15b (see Fig. 6) is performed as well as the control of the electrically driven compressor 6 (see Fig. 6), instead of the above.

To be more specific, in the example shown in Fig. 2 in which the control device for an internal combustion engine according to the first embodiment is used, in step S104, the opening degree of the variable nozzle device 5 (see Fig. 1) that serves as the exhaust gas flow rate adjusting device for adjusting the flow rate of the exhaust gas supplied to the turbine 4b (see Fig. 1) is calculated by, for example, the ECU 50 (see Fig. 1) on the basis of the target value P1trg of the first boost pressure. However, in the example shown in Fig. 2 in which the control device for an internal combustion engine according to the second embodiment is used, the opening degree of the waste gate valve 15b (see Fig. 6) that serves as the exhaust gas flow rate adjusting device for adjusting the flow rate of the exhaust gas supplied to the turbine 4b (see Fig. 6) is calculated by, for example, the ECU 50 (see Fig. 6) on the basis of the target value P1trg of the first boost pressure. In an example shown in Fig. 5 in which the control device for an internal combustion engine according to the second embodiment is used, the opening degree of the waste gate valve 15b is calculated so as to have a value indicated by the curve "First embodiment" in the section (F) of Fig. 5 when the target value P1trg of the first boost pressure is changed at the time point t1 from the value P1a to the value P1b as shown in the section (E) of Fig. 5.

In addition to the above, in the example shown in Fig. 5 in which the control device for an internal combustion engine according to the second embodiment is used, the opening degree of the waste gate valve 15b is calculated so as to be rapidly conformed to the target value P1trg of the first boost pressure without an overshoot of the first boost pressure P1 as indicated by the curve "P1 (first embodiment)" in the section (E) of Fig. 5.

In the example shown in Fig. 2 in which the control device for an internal combustion engine according to the second embodiment is used, in step S105, the waste gate valve 15b is controlled by the ECU 50 so as to achieve the opening degree of the waste gate valve 15b calculated in step S104. That is, in the example shown in Fig.5 in which the control device for an internal combustion engine according to the second embodiment is used, in step S105, the waste gate valve 15b is so as to be rapidly conformed to the target value P1trg of the first boost pressure without an overshoot of the first boost pressure P1 as indicated by the curve "P1 (first embodiment)" in the section (E) of Fig. 5. In other words, in step S105, the waste gate valve 15b that serves as the exhaust gas flow rate adjusting device is controlled by the ECU 50 on the basis of the difference between the target value P1trg of the first boost pressure and the first boost pressure (detection value) P1 detected by the first pressure sensor 41 (see Fig. 6).

In the example shown in Fig.5 in which the control device for an internal combustion engine according to the second embodiment is used, during a time period from t1 to t5, since the first boost pressure P1 (the value indicated by the curve "P1 (first embodiment)" in the section (E) of Fig. 5) is smaller than the value P1b of the target value P1trg of the first boost pressure as shown in the section (E) of Fig. 5, the opening degree of the waste gate valve 15b (see Fig. 6) is controlled, by a feedback control, so as to be closed (that is, so as to shift to the upper side in the section (F) of Fig. 5) as compared with the base opening degree (see the section (F) of Fig. 5) as shown in the section (F) of Fig. 5 in order to increase the first boost pressure P1. That is, the opening degree of the waste gate valve 15b is controlled so as to fall within a range between the value F1 (see the section (F) of Fig. 5) and the base opening degree.

Furthermore, in the example shown in Fig. 5 in which the control device for an internal combustion engine according to the second embodiment is used, the opening degree of the waste gate valve 15b is controlled to be the base opening degree at or after the time point t5 at which the first boost pressure P1 indicated by the curve "P1 (first embodiment)" in the section (E) of Fig. 5 is conformed to the value P1b of the target value P1trg of the first boost pressure.

That is, in the example shown in Fig. 5 in which the control device for an internal combustion engine according to the second embodiment is used, the base opening degree of the waste gate valve 15b is set such that, if the opening degree (see the section (F) of Fig. 5) of the waste gate valve 15b is controlled to be the base opening degree (see the section (F) of Fig. 5), the first boost pressure P1 is conformed to the value P1b (see the section (E) of Fig.5) of the target value P1trg of the first boost pressure. In other words, if the opening degree of the waste gate valve 15b is controlled to be the value F2 on the side of opening degrees that are greater (that is, on the lower side in the section (F) of Fig. 5) as compared with the base opening degree as indicated by the curve "Comparative example" in the section (F) of Fig. 5, the first boost pressure P1 does not increase so as to reach the value P1b as indicated by the curve "Comparative example" in the section (E) of Fig. 5.

In the control device for an internal combustion engine according to the second embodiment, the waste gate valve 15b (see Fig. 6) that serves as the exhaust gas flow rate adjusting device for adjusting the flow rate of the exhaust gas supplied to the turbine 4b (see Fig. 6) of the turbocharger 4 arranged in the exhaust channel 3 (see Fig. 6) is controlled on the basis of the difference between the target value P1trg (see the section (E) of Fig. 5) of the first boost pressure that is boost pressure at a part of the intake channel 2 (see Fig. 6) between the compressor 4a (see Fig. 6) of the turbocharger 4 (see Fig. 6) and the electrically driven compressor 6 (see Fig. 6) arranged on the downstream side of the compressor 4a, and the detection value of the first boost pressure indicated by the "P1 (first embodiment)" in the section (E) of Fig. 5 with the first pressure sensor 41 (see Fig. 6).

Thus, with the control device for an internal combustion engine according to the second embodiment, the target value P1trg of the first boost pressure and the detection value of the first boost pressure can be rapidly conformed to each other as compared with the internal combustion engine disclosed in JP 2008-274833A in which the control of the exhaust gas flow rate adjusting device based on the difference between the target value P1trg of the first boost pressure and the detection value of the first boost pressure is not performed.

In other words, in the control device for an internal combustion engine according to the second embodiment, the target value P1trg of the first boost pressure and the target value P2trg of the second boost pressure are set such that they have the second relationship shown in Fig. 4. Also, the feedback control of the waste gate valve 15b (see Fig. 6) is performed on the basis of the difference between the target value P1trg of the first boost pressure and the detection value of the first boost pressure, and the feedback control of the electrically driven compressor 6 (see Fig. 6) is performed on the basis of the difference between the target value P2trg of the second boost pressure and the detection value of the second boost pressure.

As a result, with the control device for an internal combustion engine according to the second embodiment, without the need for providing processes to adapt the control of the waste gate valve 15b and the control of the electrically driven compressor 6 and to perform a complex model-based control, such as one disclosed in JP 5817578 B, for example, and therefore, an acceleration according to an acceleration request from the driver can be achieved and the second boost pressure can be increased smoothly without a stepwise change.

According to a third embodiment, any of the first and second embodiments described above and the examples described above can be appropriately combined.

## Claims

1. A control device (50) for an internal combustion engine that includes:
an internal combustion engine main body (1);
an intake channel (2) connected to the internal combustion engine main body (1);
an exhaust channel (3) connected to the internal combustion engine main body (1);
a turbocharger (4) that includes a compressor (4a) arranged in the intake channel (2) and a turbine (4b) arranged in the exhaust channel (3);
an electrically driven compressor (6) arranged at a part of the intake channel (2) on a downstream side of the compressor (4a) of the turbocharger (4);
a first pressure sensor (41) configured to detect a first boost pressure (P1) which is boost pressure at a part of the intake channel (2) between the compressor (4a) of the turbocharger (4) and the electrically driven compressor (6);
a second pressure sensor (42) configured to detect a second boost pressure (P2) which is boost pressure at a part of the intake channel (2) on a downstream side of the electrically driven compressor (6); and
an exhaust gas flow rate adjusting device (5; 15a, 15b) configured to adjust a flow rate of exhaust gas supplied to the turbine (4b),
wherein the control device (50) is programmed to control the exhaust gas flow rate adjusting device (5; 15a, 15b) based on a difference between a target value (P1trg) of the first boost pressure (P1) and a detection value of the first boost pressure (P1) with the first pressure sensor (41),
wherein the control device (50) is programmed to control the electrically driven compressor (6) based on a difference between a target value (P2trg) of the second boost pressure (P2) and a detection value of the second boost pressure (P2) with the second pressure sensor (42),
wherein the control device (50) is programmed to calculate the target value (P2trg) of the second boost pressure (P2) based on an engine speed (NE), an engine torque (Q), and a first relationship between the engine speed (NE), the engine torque (Q) and the target value (P2trg) of the second boost pressure (P2), and
wherein the control device (50) is programmed to calculate the target value (P1trg) of the first boost pressure (P1) based on an amount (Ga) of air taken into the internal combustion engine main body (1), the target value (P2trg) of the second boost pressure (P2) and a second relationship between the air amount (Ga), the target value (P1trg) of the first boost pressure (P1) and the target value (P2trg) of the second boost pressure (P2).

2. A control device (50) for an internal combustion engine that includes:
an internal combustion engine main body (1);
an intake channel (2) connected to the internal combustion engine main body (1);
an exhaust channel (3) connected to the internal combustion engine main body (1);
a turbocharger (4) that includes a compressor (4a) arranged in the intake channel (2) and a turbine (4b) arranged in the exhaust channel (3);
an electrically driven compressor (6) arranged at a part of the intake channel (2) on a downstream side of the compressor (4a) of the turbocharger (4);
a first pressure sensor (41) configured to detect a first boost pressure (P1) which is boost pressure at a part of the intake channel (2) between the compressor (4a) of the turbocharger (4) and the electrically driven compressor (6);
a second pressure sensor (42) configured to detect a second boost pressure (P2) which is boost pressure at a part of the intake channel (2) on a downstream side of the electrically driven compressor (6); and
an exhaust gas flow rate adjusting device (5; 15a, 15b) configured to adjust a flow rate of exhaust gas supplied to the turbine (4b),
wherein the control device (50) is programmed to control the exhaust gas flow rate adjusting device (5; 15a, 15b) based on a difference between a target value (P1trg) of the first boost pressure (P1) and a detection value of the first boost pressure (P1) with the first pressure sensor (41),
wherein the control device (50) is programmed to control the electrically driven compressor (6) based on a difference between a target value (P2trg) of the second boost pressure (P2) and a detection value of the second boost pressure (P2) with the second pressure sensor (42),
wherein the control device (50) is programmed to calculate the target value (P1trg) of the first boost pressure (P1) based on an engine speed (NE), an engine torque (Q), and a first relationship between the engine speed (NE), the engine torque (Q) and the target value (P1trg) of the first boost pressure (P1), and
wherein the control device (50) is programmed to calculate the target value (P2trg) of the second boost pressure (P2) based on an amount (Ga) of air taken into the internal combustion engine main body (1), the target value (P1trg) of the first boost pressure (P1) and a second relationship between the air amount (Ga), the target value (P1trg) of the first boost pressure (P1) and the target value (P2trg) of the second boost pressure (P2).

3. The control device (50) for an internal combustion engine according to claim 1 or 2,
wherein the exhaust gas flow rate adjusting device (5; 15a, 15b) is a variable nozzle device (5) arranged in the turbine (4b) at an inlet of the exhaust gas.

4. The control device (50) for an internal combustion engine according to claim 1 or 2,
wherein the exhaust gas flow rate adjusting device (5; 15a, 15b) is a waste gate channel (15a) configured to bypass the turbine (4b) and a waste gate valve (15b) arranged in the waste gate channel (15a).

5. The control device (50) for an internal combustion engine according to claim 1 or 2,
wherein the second relationship is set such that, when the air amount (Ga) is zero, the target value (P1trg) of the first boost pressure (P1) and the target value (P2trg) of the second boost pressure (P2) become equal to each other, and such that, when the air amount (Ga) is greater than zero, the target value (P1trg) of the first boost pressure (P1) becomes greater than the target value (P2trg) of the second boost pressure (P2).

6. The control device (50) for an internal combustion engine according to claim 4,
wherein the second relationship is set such that, when the air amount (Ga) is greater, a difference between the target value (P1trg) of the first boost pressure (P1) and the target value (P2trg) of the second boost pressure (P2) becomes greater.

## Patentansprüche

1. Steuervorrichtung (50) für eine Verbrennungskraftmaschine mit:
einem Verbrennungskraftmaschinen-Hauptkörper (1),
einem mit dem Verbrennungskraftmaschinen-Hauptkörper (1) verbundenen Einlasskanal (2),
einem mit dem Verbrennungskraftmaschinen-Hauptkörper (1) verbundenen Auslasskanal (3),
einem Turbolader (4), der einen in dem Einlasskanal (2) angeordneten Verdichter (4a) und eine in dem Auslasskanal (3) angeordnete Turbine (4b) beinhaltet,
einem elektrisch angetriebenen Verdichter (6), der stromabwärts des Verdichters (4a) des Turboladers an einem Teilabschnitt des Einlasskanals (2) angeordnet ist,
einem ersten Drucksensor (41), der eingerichtet ist, einen ersten Ladedruck (P1), welcher ein Ladedruck an einem Teilabschnitt des Einlasskanals (2) zwischen dem Verdichter (4a) des Turboladers (4) und dem elektrisch angetriebenen Verdichter (6) ist, zu detektieren,
einem zweiten Drucksensor (42), der eingerichtet ist, einen zweiten Ladedruck (P2), welcher ein Ladedruck an einem Teilabschnitt des Einlasskanals (2) stromabwärts des elektrisch angetriebenen Verdichters (6) ist, zu detektieren, und
einer Abgasdurchflussmengen-Einstellvorrichtung (5; 15a, 15b), die eingerichtet ist, eine Durchflussmenge von der Turbine (4b) zugeführtem Abgas einzustellen,
wobei die Steuervorrichtung (50) programmiert ist, die Abgasdurchflussmengen-Einstellvorrichtung (5; 15a, 15b) basierend auf einer Differenz zwischen einem Sollwert (P1trg) des ersten Ladedrucks (P1) und einem mit dem ersten Drucksensor (41) detektierten Detektionswert des ersten Ladedrucks (P1) zu steuern,
wobei die Steuervorrichtung (50) programmiert ist, den elektrisch angetriebenen Verdichter (6) basierend auf einer Differenz zwischen einem Sollwert (P2trg) des zweiten Ladedrucks (P2) und einem mit dem zweiten Drucksensor (42) detektierten Detektionswert des zweiten Ladedrucks (P2) zu steuern,
wobei die Steuervorrichtung (50) programmiert ist, den Sollwert (P2trg) des zweiten Ladedrucks (P2) basierend auf einer Motordrehzahl (NE), einem Motordrehmoment (Q) und einem ersten Verhältnis zwischen der Motordrehzahl (NE), dem Motordrehmoment (Q) und dem Sollwert (P2trg) des zweiten Ladedrucks (P2) zu berechnen, und
wobei die Steuervorrichtung (50) programmiert ist, den Sollwert (P1trg) des ersten Ladedrucks (P1) basierend auf einer in den Verbrennungskraftmaschinen-Hauptkörper (1) gesaugten Luftmenge (Ga), dem Sollwert (P2trg) des zweiten Ladedrucks (P2) und einem zweiten Verhältnis zwischen der Luftmenge (Ga), dem Sollwert (P1trg) des ersten Ladedrucks (P1) und dem Sollwert (P2trg) des zweiten Ladedrucks (P2) zu berechnen.

2. Steuervorrichtung (50) für eine Verbrennungskraftmaschine mit:
einem Verbrennungskraftmaschinen-Hauptkörper (1),
einem mit dem Verbrennungskraftmaschinen-Hauptkörper (1) verbundenen Einlasskanal (2),
einem mit dem Verbrennungskraftmaschinen-Hauptkörper (1) verbundenen Auslasskanal (3),
einem Turbolader (4), der einen in dem Einlasskanal (2) angeordneten Verdichter (4a) und eine in dem Auslasskanal (3) angeordnete Turbine (4b) beinhaltet,
einem elektrisch angetriebenen Verdichter (6), der stromabwärts des Verdichters (4a) des Turboladers an einem Teilabschnitt des Einlasskanals (2) angeordnet ist,
einem ersten Drucksensor (41), der eingerichtet ist, einen ersten Ladedruck (P1), welcher ein Ladedruck an einem Teilabschnitt des Einlasskanals (2) zwischen dem Verdichter (4a) des Turboladers (4) und dem elektrisch angetriebenen Verdichter (6) ist, zu detektieren,
einem zweiten Drucksensor (42), der eingerichtet ist, einen zweiten Ladedruck (P2), welcher ein Ladedruck an einem Teilabschnitt des Einlasskanals (2) stromabwärts des elektrisch angetriebenen Verdichters (6) ist, zu detektieren, und
einer Abgasdurchflussmengen-Einstellvorrichtung (5; 15a, 15b), die eingerichtet ist, eine Durchflussmenge von der Turbine (4b) zugeführtem Abgas einzustellen,
wobei die Steuervorrichtung (50) programmiert ist, die Abgasdurchflussmengen-Einstellvorrichtung (5; 15a, 15b) basierend auf einer Differenz zwischen einem Sollwert (P1trg) des ersten Ladedrucks (P1) und einem mit dem ersten Drucksensor (41) detektierten Detektionswert des ersten Ladedrucks (P1) zu steuern,
wobei die Steuervorrichtung (50) programmiert ist, den elektrisch angetriebenen Verdichter (6) basierend auf einer Differenz zwischen einem Sollwert (P2trg) des zweiten Ladedrucks (P2) und einem mit dem zweiten Drucksensor (42) detektierten Detektionswert des zweiten Ladedrucks (P2) zu steuern,
wobei die Steuervorrichtung (50) programmiert ist, den Sollwert (P1trg) des ersten Ladedrucks (P1) basierend auf einer Motordrehzahl (NE), einem Motordrehmoment (Q) und einem ersten Verhältnis zwischen der Motordrehzahl (NE), dem Motordrehmoment (Q) und dem Sollwert (P1trg) des ersten Ladedrucks (P1) zu berechnen, und
wobei die Steuervorrichtung (50) programmiert ist, den Sollwert (P2trg) des zweiten Ladedrucks (P2) basierend auf einer in den Verbrennungskraftmaschinen-Hauptkörper (1) gesaugten Luftmenge (Ga), dem Sollwert (P1trg) des ersten Ladedrucks (P1) und einem zweiten Verhältnis zwischen der Luftmenge (Ga), dem Sollwert (P1trg) des ersten Ladedrucks (P1) und dem Sollwert (P2trg) des zweiten Ladedrucks (P2) zu berechnen.

3. Steuervorrichtung (50) für eine Verbrennungskraftmaschine nach Anspruch 1 oder 2, wobei die Abgasdurchflussmengen-Einstellvorrichtung (5; 15a, 15b) eine verstellbare Düsenvorrichtung (5) ist, die in der Turbine (4b) an einem Einlass des Abgases angeordnet ist.

4. Steuervorrichtung (50) für eine Verbrennungskraftmaschine nach Anspruch 1 oder 2, wobei die Abgasdurchflussmengen-Einstellvorrichtung (5; 15a, 15b) ein Wastegate-Kanal (15a), der eingerichtet ist, die Turbine (4b) zu umgehen, und ein in dem Wastegate-Kanal (15a) angeordnetes Wastegate-Ventil (15b) ist.

5. Steuervorrichtung (50) für eine Verbrennungskraftmaschine nach Anspruch 1 oder 2, wobei das zweite Verhältnis so eingestellt ist, dass der Sollwert (P1trg) des ersten Ladedrucks (P1) und der Sollwert (P2trg) des zweiten Ladedrucks (P2), wenn die Luftmenge (Ga) null ist, gleich werden, und dass der Sollwert (P1trg) des ersten Ladedrucks (P1) größer als der Sollwert (P2trg) des zweiten Ladedrucks (P2) wird, wenn die Luftmenge (Ga) größer als null ist.

6. Steuervorrichtung (50) für eine Verbrennungskraftmaschine nach Anspruch 4, wobei das zweite Verhältnis so eingestellt ist, dass eine Differenz zwischen dem Sollwert (P1trg) des ersten Ladedrucks (P1) und dem Sollwert (P2trg) des zweiten Ladedrucks (P2) größer wird, wenn die Luftmenge (Ga) größer ist.

## Revendications

1. Dispositif de commande (50) pour un moteur à combustion interne qui comprend :
un corps principal de moteur à combustion interne (1) ;
un canal d'admission (2) raccordé au corps principal de moteur à combustion interne (1) ;
un canal d'échappement (3) raccordé au corps principal de moteur à combustion interne (1) ;
un turbocompresseur (4) qui comprend un compresseur (4a) agencé dans le canal d'admission (2) et une turbine (4b) agencée dans le canal d'échappement (3) ;
un compresseur entraîné par voie électrique (6) agencé au niveau d'une partie du canal d'admission (2) sur un côté en aval du compresseur (4a) du turbocompresseur (4) ;
un premier capteur de pression (41) configuré pour détecter une première pression de suralimentation (P1) qui est la pression de suralimentation au niveau d'une partie du canal d'admission (2) entre le compresseur (4a) du turbocompresseur (4) et le compresseur entraîné par voie électrique (6) ;
un second capteur de pression (42) configuré pour détecter une seconde pression de suralimentation (P2) qui est la pression de suralimentation au niveau d'une partie du canal d'admission (2) sur un côté en aval du capteur entraîné par voie électrique (6) ; et
un dispositif d'ajustement de débit de gaz d'échappement (5 ; 15a, 15b) configuré pour ajuster un débit de gaz d'échappement fourni à la turbine (4b),
dans lequel le dispositif de commande (50) est programmé pour commander le dispositif d'ajustement de débit de gaz d'échappement (5 ; 15a, 15b) sur la base d'une différence entre une valeur cible (P1trg) de la première pression de suralimentation (P1) et une valeur de détection de la première pression de suralimentation (P1) avec le premier capteur de pression (41),
dans lequel le dispositif de commande (50) est programmé pour commander le compresseur entraîné par voie électrique (6) sur la base d'une différence entre une valeur cible (P2trg) de la seconde pression de suralimentation (P2) et une valeur de détection de la seconde pression de suralimentation (P2) avec le second capteur de pression (42),
dans lequel le dispositif de commande (50) est programmé pour calculer la valeur cible (P2trg) de la seconde pression de suralimentation (P2) sur la base d'une vitesse de moteur (NE), d'un couple de moteur (Q) et d'une première relation entre la vitesse de moteur (NE), le couple de moteur (Q) et la valeur cible (P2trg) de la seconde pression de suralimentation (P2), et
dans lequel le dispositif de commande (50) est programmé pour calculer la valeur cible (P1trg) de la première pression de suralimentation (P1) sur la base d'une quantité (Ga) d'air prélevé dans le corps principal de moteur à combustion interne (1), la valeur cible (P2trg) de la seconde pression de suralimentation (P2) et une seconde relation entre la quantité d'air (Ga), la valeur cible (P1trg) de la première pression de suralimentation (P1) et la valeur cible (P2trg) de la seconde pression de suralimentation (P2).

2. Dispositif de commande (50) pour un moteur à combustion interne qui comprend :
un corps principal de moteur à combustion interne (1) ;
un canal d'admission (2) raccordé au corps principal de moteur à combustion interne (1) ;
un canal d'échappement (3) raccordé au corps principal de moteur à combustion interne (1) ;
un turbocompresseur (4) qui comprend un compresseur (4a) agencé dans le canal d'admission (2) et une turbine (4b) agencée dans le canal d'échappement (3) ;
un compresseur entraîné par voie électrique (6) agencé au niveau d'une partie du canal d'admission (2) sur un côté en aval du compresseur (4a) du turbocompresseur (4) ;
un premier capteur de pression (41) configuré pour détecter une première pression de suralimentation (P1) qui est la pression de suralimentation au niveau d'une partie du canal d'admission (2) entre le compresseur (4a) du turbocompresseur (4) et le compresseur entraîné par voie électrique (6) ;
un second capteur de pression (42) configuré pour détecter une seconde pression de suralimentation (P2) qui est la pression de suralimentation au niveau d'une partie du canal d'admission (2) sur un côté en aval du compresseur entraîné par voie électrique (6) ; et
un dispositif d'ajustement de débit de gaz d'échappement (5 ; 15a, 15b) configuré pour ajuster un débit de gaz d'échappement fourni à la turbine (4b),
dans lequel le dispositif de commande (50) est programmé pour commander le dispositif d'ajustement de débit de gaz d'échappement (5 ; 15a, 15b) sur la base d'une différence entre une valeur cible (P1trg) de la première pression de suralimentation (P1) et une valeur de détection de la première pression de suralimentation (P1) avec le premier capteur de pression (41),
dans lequel le dispositif de commande (50) est programmé pour commander le compresseur entraîné par voie électrique (6) sur la base d'une différence entre une valeur cible (P2trg) de la seconde pression de suralimentation (P2) et une valeur de détection de la seconde pression de suralimentation (P2) avec le second capteur de pression (42),
dans lequel le dispositif de commande (50) est programmé pour calculer la valeur cible (P1trg) de la première pression de suralimentation (P1) sur la base d'une vitesse de moteur (NE), d'un couple de moteur (Q) et d'une première relation entre la vitesse de moteur (NE), du couple de moteur (Q) et de la valeur cible (P1trg) de la première pression de suralimentation (P1), et
dans lequel le dispositif de commande (50) est programmé pour calculer la valeur cible (P2trg) de la seconde pression de suralimentation (P2) sur la base d'une quantité (Ga) d'air prélevé dans le corps principal de moteur à combustion interne (1), la valeur cible (P1trg) de la première pression de suralimentation (P1) et une seconde relation entre la quantité d'air (Ga), la valeur cible (P1trg) de la première pression de suralimentation (P1) et la valeur cible (P2trg) de la seconde pression de suralimentation (P2).

3. Dispositif de commande (50) pour un moteur à combustion interne selon la revendication 1 ou 2,
dans lequel le dispositif d'ajustement de débit de gaz d'échappement (5 ; 15a, 15b) est un dispositif de buse variable (5) agencé dans la turbine (4b) au niveau d'une entrée du gaz d'échappement.

4. Dispositif de commande (50) pour un moteur à combustion interne selon la revendication 1 ou 2,
dans lequel le dispositif d'ajustement de débit de gaz d'échappement (5 ; 15a, 15b) est un canal de décharge des gaz d'échappement (15a) configuré pour contourner la turbine (4b) et une soupape de décharge des gaz d'échappement (15b) agencée dans le canal de décharge des gaz d'échappement (15a).

5. Dispositif de commande (50) pour un moteur à combustion interne selon la revendication 1 ou 2,
dans lequel la seconde relation est déterminée de sorte que, lorsque la quantité d'air (Ga) est nulle, la valeur cible (P1trg) de la première pression de suralimentation (P1) et la valeur cible (P2trg) de la seconde pression de suralimentation (P2) deviennent égales entre elles, et de sorte que, lorsque la quantité d'air (Ga) est supérieure à zéro, la valeur cible (P1trg) de la première pression de suralimentation (P1) devient supérieure à la valeur cible (P2trg) de la seconde pression de suralimentation (P2).

6. Dispositif de commande (50) pour un moteur à combustion interne selon la revendication 4,
dans lequel la seconde relation est déterminée de sorte que, lorsque la quantité d'air (Ga) est plus importante, une différence entre la valeur cible (P1trg) de la première pression de suralimentation (P1) et la valeur cible (P2trg) de la seconde pression de suralimentation (P2) devient plus importante.
